# EUROPÄISCHE PATENTSCHRIFT

(11) **EP 1 270 132 B1**
(45) Veröffentlichungstag und Bekanntmachung des Hinweises auf die Patenterteilung: **02.11.2006**
(21) Anmeldenummer: 02013148.8
(22) Anmeldetag: 14.06.2002
(51) Int. Cl.: B23K 10/02, F16L 41/02

(54) **Grundkörper aus gefügten Rohrstücken und Verfahren zu seiner Herstellung**
Main body made of joined pipe sections and method for manufacturing the same
Corps de base constitué de tronçons de tube joints et procédé de fabrication

(30) Priorität: 15.06.2001 DE 10129070
(43) Veröffentlichungstag der Anmeldung: 02.01.2003
(73) Patentinhaber: Josch Strahlschweisstechnik GmbH, 06193 Teicha (DE)
(72) Erfinder: Schenke, Joachim, 39118 Magdeburg (DE); Sobisch, Götz, 06193 Teicha (DE); Philipp, Steffen, 06188 Hohenthurm (DE)
(74) Vertreter: Leinung, Günter

(56) Entgegenhaltungen:
- EP-A- 1 132 672
- DE-A- 2 434 482
- FR-A- 2 311 980
- FR-A- 2 346 094
- US-A- 3 582 605
- US-A- 3 752 952
- US-A- 4 164 640
- US-A- 4 914 268
- US-A- 4 948 938
- US-A- 6 158 783

## Beschreibung

Die Erfindung betrifft einen Grundkörper aus gefügten Rohrstücken, welcher in Schweißkonstruktion ausgebildet ist und als Basiselement von Bauteilen und Baugruppen insbesondere in der Armaturenindustrie zur Anwendung kommt und ein Verfahren zur Herstellung des Grundkörpers, durch Elektronenstrahlschweißung.

Es gehört zum allgemeinen Stand der Technik, dass Grundkörper, so Armaturengehäuse, durch die Verschweißung von einzelnen Baugruppen hergestellt werden können, dies unter Nutzung und Anwendung der Elektronenstrahlschweißung.

So beschreibt die EP 0027765 B1 einen Kugelhahn mit einem rohrförmigen Körper, der ringförmige Enden aufweist sowie Flansche und weitere Funktionselemente, bei denen die in den rohrförmigen Flanschen eingesetzten Anschlussstützen durch Elektronenbeschuss, also durch eine Elektronenstrahlschweißung verbunden werden
Das Problem bei der Anwendung der Elektronenstrahlschweißung besteht zum einen darin, den Elektronenstrahl entlang der zufügenden Teile zu führen und zum anderen darin eine ausreichende und somit qualitätsgerechte Schweißung zu erreichen. Dies ist unter anderem auch abhängig von der Ausbildung der Nahtformen der zu verbindenden Teile, wie in einer Veröffentlichung von Schultz, Helmut; Elektronenstrahlschweißen, 2. Auflage-Düsseldorf: Verlag für Schweißen und verwandte Verfahren, DVS-Verlag, 2000 Seite 85 ff. ausgeführt und darauf verwiesen wird, dass die Schweißnahtvorbereitungen der einfachsten Art darin gegeben sind, wenn diese Schweißnaht bzw. der Stoß als eine I-Naht ausgebildet ist. Wegen des verhältnismäßig geringen Arbeitungsaufwandes gilt diese Nahtform als Vorbild fast aller Elektronenstrahl-Schweißverbindungen. Es wird dann ferner ausgeführt, dass zur Positionierung der Werkstückteile entsprechende formschlüssige Elemente vorzusehen sind, so beispielsweise Zentrierlippen. Diese sollen zum einen die Positionierung der zu verbindenden Teile bewirken und zum anderen soll ein Schutz gegen Spritzer erreicht werden, die sonst beim Schweißen an der Nahtunterseite austreten. Die Ausbildung und die konstruktive Gestaltung der Zentrierlippen ist sehr vielgestaltig, sie können als Ansätze, aber auch als Unterlagen ausgebildet sein.
Es wird dann auch ausgeführt, dass derartige Nahtformen, I-Nähte, grundsätzlich auch für das Elektronenstrahlschweißen von Rundnähten geeignet seien, wobei ausgeführt wird, dass für das Schweißen von Radialnähten unbedingt eine Zentrierung vorzusehen ist.
Auch diese Zentrierungen sind in vielfältiger Weise ausgeführt, so durch Ansätze und Aussparungen, durch angepasste Flansche oder durch die Anordnung von zusätzlichen Bauteilen im Grund der jeweiligen Schweißnaht.

Die speziellen Nahtvorbereitungen der bekannten Verfahren bedingen hohe fertigungstechnische als auch kostenaufwendige Maßnahmen, was wesentliche Nachteile dieser Verfahren und Methoden sind.
Ferner ist nachteilig, dass, wie in der genannten Veröffentlichung ausgeführt, eine Verbindung von Stutzen und Rohr eine komplizierte, aufwendige Steuerungstechnik erfordern, um den Elektronenstrahl um den Stutzen zu führen. Auch bei einer Schrägstellung des Elektronenstrahls zur Naht werden hier nur Schweißtiefen von maximal 10 mm erreicht, so dass Rohr-Rohrverbindung oder Rohr-Stutzenverbindungen mit stärkeren Wanddicken nicht qualitätsgerecht geschweißt werden können.

Dokument US 4948938 offenbart einen Grundkörper in Form eines T-90°-Stückes.

Aufgabe der vorliegenden Erfindung ist es daher, einen Grundkörper aus gefügten Rohrstücken in Schweißkonstruktion und ein Verfahren zu seiner Herstellung zu entwickeln, der als Basiselement von verschiedenen Bauteilen dient und mit denen die Nachteile der Standes der Technik beseitigt werden.

Erfindungsgemäß wird die Aufgabe mit den Merkmalen der Ansprüche 1 und 5 gelöst.

Besondere Ausgestaltungen und vorteilhafte Lösungen ergeben sich aus den Unteransprüchen.

Bei dem in Schweißkonstruktion geschaffenen Grundkörper handelt es sich um eine Stutzen-Rohr-Verbindung, bei der die beiden Bauteile an ihrer gemeinsamen Fügefläche mit deckungsgleich und parallel verlaufenden Schweißnahtflächen ausgebildet sind, die beim Fügen eine gemeinsame sattelförmige, umlaufende Stoßfuge bilden und somit gleichfalls eine I-Naht zwischen den zu schweißenden Teilen hergestellt wird, wobei wesentlich ist, dass durch die Ausbildung der parallel verlaufenden Schweißnahtflächen, welche zu ihren eigenen Mittelachsen ein gewisses Neigungsmaß besitzen, dass dem Schweißnahtwinkel α entspricht und ferner durch die Ausbildung der Schweißnahtflächen keine zusätzlichen Hilfsmittel in Form von Zentrierungen notwendig werden, um eine qualitätsgerechte Elektronenschweißung zu erzielen.

Dabei ist ferner wesentlich, dass der Schweißwinkel α während des gesamten Schweißvorganges im eingestellten Winkelmaß umläuft und in jeder Schweißposition den eingestellten und identischen Schweißwinkel α zur Rohrachse besitzt und somit die Bedingung erfüllt ist, dass der Elektronenstrahlwinkel dem Winkel der Schweißnaht entspricht, beide besitzen das gleiche Winkelmaß.

Durch die Ausbildung der Schweißnahtflächen an den Fügestellen der zu schweißenden Teile und der Bedingung, dass der Elektronenstrahlwinkel mit dem jeweiligen Schweißnahtwinkel identisch sind, wird gesichert, dass durch den Elektronenstrahl die gesamte Schweißnaht vollflächig geschweißt wird. Ein weiterer wesentlicher Vorteil besteht darin, dass durch die geschaffene Lösung Rohr-Stutzen-Verbindungen in vielfältigen Variationen hergestellt werden können. So können diese Grundkörper als Gehäuse von Armaturen dienen, so unter anderem für Kugelhähne, Absperrventile, Schieber, Sicherheitsventile, Stellventile, Klappen, Probeentnahmearmaturen, Filter oder auch Hosenrohre. Dies unter den Bedingungen, dass die zufügenden Rohre/Stutzen sowohl unter einem Winkel von 90° als auch wesentlich kleiner als 90 ° zueinander verbunden sind.
Bei allen herzustellenden Grundkörpern gilt der erfindungsgemäße Grundsatz, dass die Fügestellen der zu verbindenden Teile flächenhafte und parallel zueinander ausgebildete Schweißnahtflächen mit gleichem Neigungsmaß, dem Schweißnahtwinkel a entsprechend, ausgebildet sind und der Elektronenstrahl unter gleichem Winkelmaß zur Stoßfuge der zu verbindenden Teile positioniert und geführt und eine qualitätsgerechte Schweißnaht erzielt wird.

In einem bevorzugten Ausführungsbeispiel werden, um intermetallische Phasen zwischen den zu verbindenden Teilen auszuschließen, Zwischenlagen eingesetzt, die als metallische Folien ausgebildet sind.
Neben des Einsatzes von Zwischenlagen ist es auch möglich, die Schweißnahtoberflächen mit einem Zusatzmaterial zu versehen, was durch Auftragsschweißung oder durch ein Aufdampfen erfolgen kann.

Denkbar ist auch, dass durch die Anordnung von metallischen Folien, als Zwischenlagen zwischen den zu verbindenden Teilen und in Abhängigkeit der Ausbildung der Metallfolie, die Verbindungen auch durch Lötvorgänge hergestellt werden können.
Ferner sei darauf verwiesen, dass mit der erfindungsgemäßen Lösung nicht nur Rohr-Stutzen mit zylindrischen Abmaßen verbunden werden können, sondern dieses Verfahren ist auch anwendbar auf profilierte Rohre und profilierte Stutzen, welche beispielsweise quadratische Querschnitte besitzen.
Ein weiterer Vorteil besteht darin, dass auch Grundkörper geschaffen werden können, deren Mittelachsen nicht nur senkrecht und somit unter einem Winkel von 90° und unter einem Maß von < 90° zueinander stehen, sondern auch Rohre und Stutzen verbunden werden können, deren Achsen um 90° versetzt und parallel verlaufen, dabei einen parallelen Achsenabstand besitzen.

Mit nachfolgendem Ausführungsbeispiel soll die Erfindung näher erläutert werden.

Die dazugehörige Zeichnung zeigt in
- Figur 1:: eine Schnittdarstellung eines Grundkörpers als T-90°-Stück,
- Figur 2:: eine perspektivische Ansicht nach Figur 1,
- Figur 3:: eine Schnittdarstellung eines Grundkörpers mit schräg eingesetztem Stutzen,
- Figur 4:: eine perspektivische Ansicht nach Figur 3,
- Figur 5:: eine Schnittdarstellung eines Grundkörpers in T-Schrägstellung mit Zwischenlage,
- Figur 6:: eine perspektivische Ansicht nach Figur 5,
- Figur 7:: eine Schnittdarstellung eines Grundkörpers mit parallel zueinander verbundenem Rohr-Stutzen.

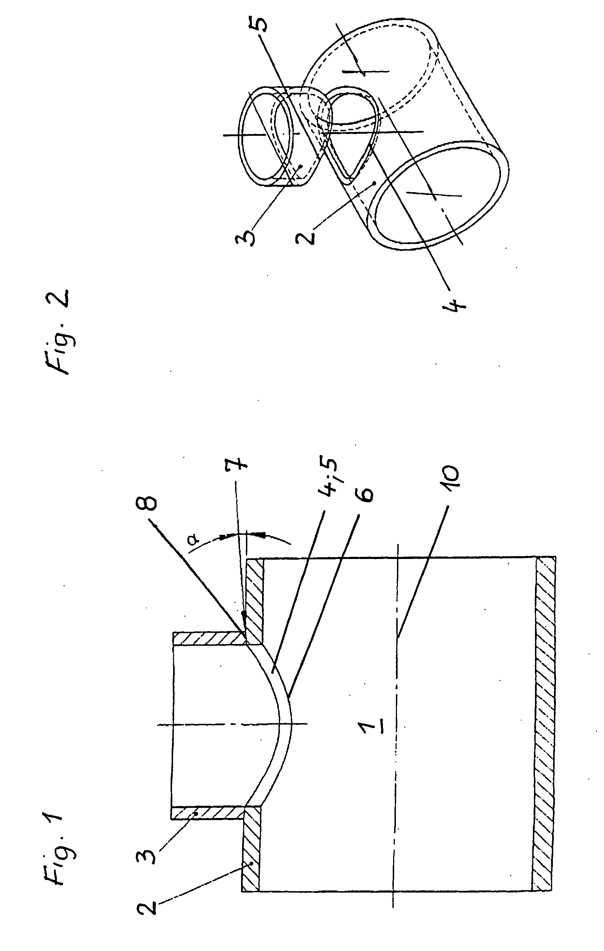

Die in den Figuren 1 bis 7 dargestellten Grundkörper 1 sind eine Auswahl von Basisteilen für die Herausbildung unterschiedlicher Bauelemente, die durch die Verbindung eines Rohres 2 und zum Rohr 2 gefügten Stutzens 3 bestehen.
So ist in den Figuren 1 und 2 ein Grundkörper 1 in Form eines T-90°-Stückes gezeigt, bei dem der Stutzen 3 als auch das Rohr 2 an ihren Verbindungsstellen mit Schweißnahtflächen 4, 5 ausgebildet sind, die sattelförmig sowie deckungsgleich und mit einem bestimmten Winkel α zu einer Ebene, die die Achse 10 des Rohres 2 umfaßt, ausgebildet sind, die beim Zueinanderfügen die Stoßfuge 6 ergeben.
Der Elektronenstrahl 7 ist dabei unter einem bestimmten Winkel auf die Stoßfuge 6 gerichtet, welcher im Größenmaß dem Schweißnahtwinkel α der Schweißnaht 8 entspricht.
Die Wahl der Verwendung, ob der Grundkörper 1 aus einem Rohr 2 und einem Stutzen 3 oder auch aus Buchsen bzw. aus der Kombination eines Rohres 2 und einer Buchse oder eines Rohres 2 und eines anderen Rundkörpers hergestellt wird, hängt immer vom jeweiligen weiteren Verwendungszweck des Grundkörpers 1 ab.
Die Auswahl der zu verbindenden Bauelemente, ob Rohre 2, Stutzen 3 oder Buchsen bzw. Kombinationen daraus, ist für den Schweißvorgang unwesentlich.
Voraussetzung für eine qualitätsgerechte Schweißung ist eine entsprechende Vorbereitung der einzelnen Teile. Dies erfolgt in der Form, dass das Rohr 2 und der Stutzen 3 mit besonders herausgebildeten Schweißnahtflächen 4, 5 ausgebildet sind und komplett in der finalen Position, d. h. stumpf aufgesetzt und dann mittels des Elektronenstrahles 7 verschweißt werden. Dabei ist wesentlich, dass das Rohr 2 und der Stutzen 3 stumpf aufeinander gesetzt sind, eine I-Naht herausgebildet wird und die gesamte umlaufende Stoßfuge 6 jeweils in einem konstanten Winkel zu einer Ebene, die die Achse 10 des Rohres 2 umfaßt, geführt wird und die beiden Teile in einem Umlauf verschweißt werden, wobei der Elektronenstrahl 7 unter einem bestimmten Schweißwinkel α zum Rohr 2 positioniert ist und diese Position während des gesamten Umlaufes beibehält, allerdings der Elektronenstrahl 7 in X- und Y-Richtung während des Schweißvorganges verstellbar ist. Dies deshalb, damit der Elektronenstrahl 7 dem Verlauf der Schweißnaht 8/Stoßfuge 6 folgen kann.
Voraussetzung für einen qualitätsgerechte Schweißung ist, dass die zu fügenden Teile nach ihrer Vorbereitung und nach dem Heftvorgang in der Schweißanlage vor dem Elektronenstrahl 7 gedreht werden können und dabei entweder der Strahlerzeuger und mit ihm der Elektronenstrahl 7 oder das Bauteil, der Grundkörper 1, Bewegungen in den X-, Y- und Z-Achsen ausführen können, die dem Verlauf der Schweißnaht 8 entsprechen. Dadurch wird eine komplette Durchschweißung der Schweißnaht 8 gesichert, da die gefügten Teile vor dem Elektronenstrahl 7 geführt werden, wobei der Elektronenstrahlwinkel dem Schweißnahtwinkel α der Schweißnaht 8 entspricht.

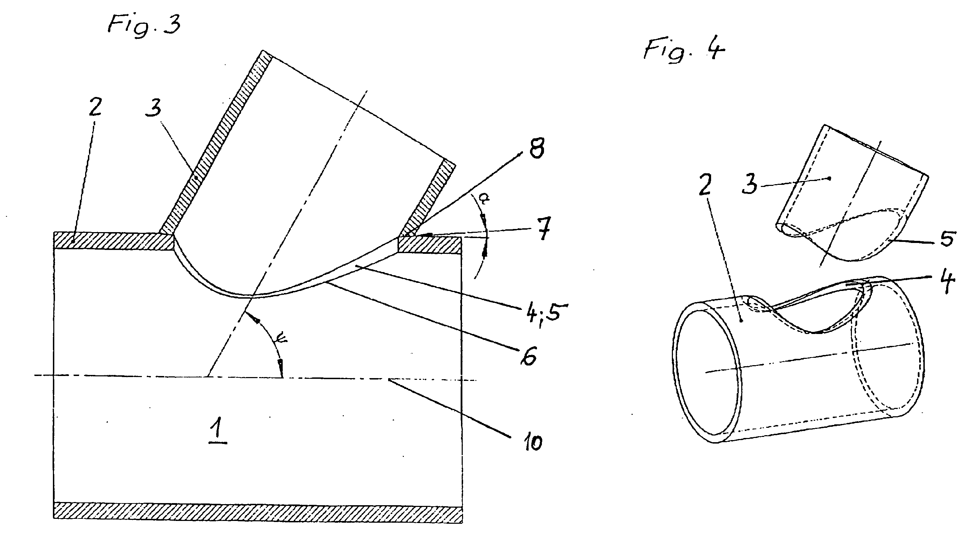

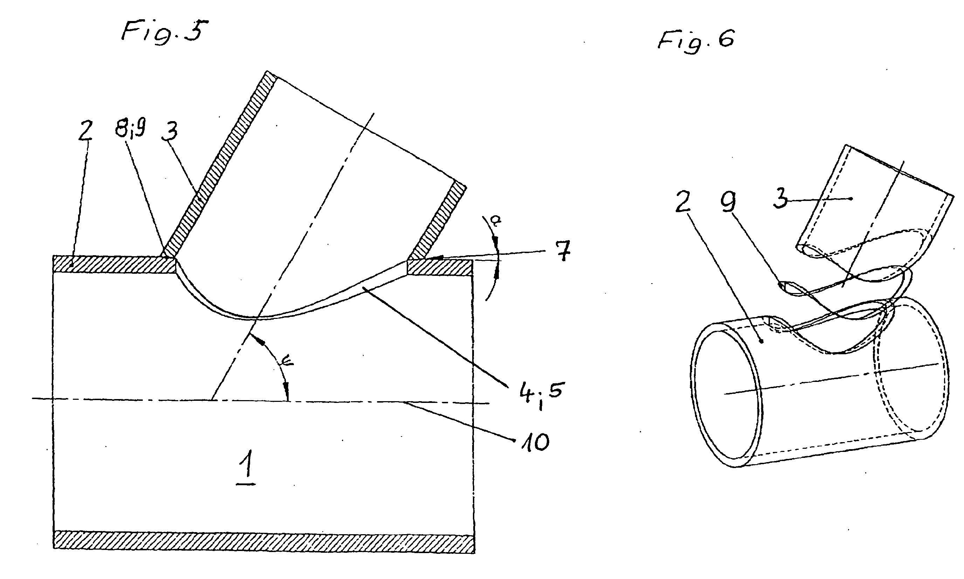

Der in den Figuren 3 und 4 dargestellte Grundkörper 1 zeigt eine Darstellung des Grundkörpers 1, bei dem der Stutzen 3 unter einem Winkel φ zum Rohr 2 gefügt ist. Auch bei dieser Ausbildung des Grundkörpers 1 sind die Schweißnahtflächen 4, 5 vom Rohr 2 und Stutzen 3 mit gleichen Neigungswinkeln ausgebildet, die wieder dem Maß des Schweißnahtwinkels α entsprechen.

In einer bevorzugten Ausführung, wie in den Figuren 5 und 6 gezeigt, ist zwischen dem Rohr 2 und dem Stutzen 3 einen Zwischenlage 9 eingebunden, welche als eine metallische Folie ausgebildet ist und immer dann zum Einsatz kommt, um intermetallische Phasen zwischen den zu verbindenden Teilen zu verhindern, welche die Qualität der Schweißung wesentlich beeinträchtigen. Derartige Zwischenlagen 9 kommen vorzugsweise zum Einsatz, wenn die zufügenden Teile aus unterschiedlichen Werkstoffen bestehen. Somit wirken die Zwischenlagen 9 als Ausgleichselemente hinsichtlich der physikalischchemischen Ausbildung der Schweißnaht 8 während des Schweißvorganges.
Neben der Verwendung der Elektronenstrahlschweißung ist es auch möglich, andere Strahlschweißverfahren, so beispielsweise einen Laser einzusetzen, mittels dem die Schweißung vorgenommen werden kann.

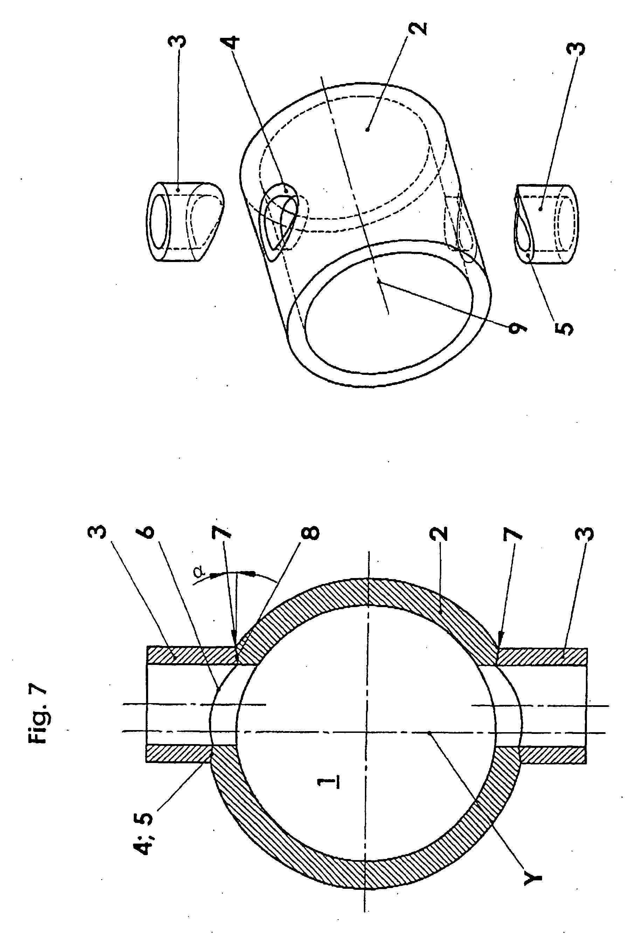

Eine weitere Ausführungsvariante eines Grundkörpers 1 is in der Figur 7 dargestellt, bei dem der Stutzen 3 ein- oder beidseitig am Rohr 2 befestigt ist, dies in der Art, dass die Längsachse des Stutzens 3 parallel zur Y-Mittelachse des Rohres 2 verläuft und der Grundkörper 1 ein Basiselement für eine exzentrische Klappe darstellt, wie sie in vielen Bereichen der Armaturentechnik zum Einsatz kommt.

Auch bei dieser Ausführungsvariante sind die Schweißnahtflächen 4, 5 vom Rohr 2 und Stutzen 3 entsprechend vorbereitet und ausgebildet und bilden beim Fügen eine Schweißnaht 8 in Form einer I-Naht aus, wobei unter Bezugnahme auf den Neigungswinkel der Schweißnahtflächen 4, 5, der Elektronenstrahl 7 umlaufend zur Stoßfuge 6 geführt wird.

## Patentansprüche

1. Grundkörper aus gefügten Rohrstücken, welcher in Schweißkonstruktion ausgebildet ist und als Basiselement von Bauteilen/Baugruppen Verwendung findet, bei dem die zu verbindenden Rohrstücke zueinander gefügt und elektronenstrahlverschweißt sind, wobei das Rohr (2) und der Stutzen (3) vom Grundkörper (1) geneigt verlaufende Schweißnahtflächen (4; 5) besitzen, deren Neigungswinkel, herausgebildet aus den Neigungsmaßen der Schweißnahtflächen (4; 5) zu den Mittelachsen des Rohres (2) und des Stutzens (3), identisch dem Schweißnahtwinkel α ist, wobei der Schweißnahtwinkel α ein Neigungsmaß zwischen 0 und 90 ° hat und dem Schweißwinkel α entspricht, der in jeder Schweißposition den eingestellten und identischen Schweißnahtwinkel α zur Rohrachse besitzt und der Stutzen (3) in der finalen Position zum Rohr (2) stumpf aufgesetzt ist und die Schweißnahtflächen (4; 5) eine deckungsgleiche ebene I-Schweißnaht (8) herausbilden, **dadurch gekennzeichnet, dass**
der am Rohr (2) angeordnete Stutzen (3) rohrseitig sattelförmig ausgebildet ist und die gemeinsame Stoßfuge (6) der Schweißnahtflächen (4;5) und die I-Schweißnaht (8) sattelförmig umlaufen.

2. Grundkörper nach Anspruch 1, **dadurch gekennzeichnet, dass**
der Stutzen (3) zum Rohr (2) rechtwinklig unter einem Winkel von 90° oder geneigt unter einem Winkel ψ von 25 bis 90° oder unter einem parallelen Abstand exzentrisch zur x-Achse des Rohres (2) ein- oder beidseitig am Rohr (2) angeordnet ist.

3. Grundkörper nach einem der Ansprüche 1 und 2, **dadurch gekennzeichnet, dass**
die Neigungswinkel der Schweißnahtflächen (4; 5) des Rohres (2) und des Stutzens (3) zur Achse (10) des Rohres (2) mit Winkelmaßen im Bereich von 1 ° bis 89° ausgebildet sind.

4. Grundkörper nach einem der Ansprüche 1 bis 3, **dadurch gekennzeichnet, dass**
zwischen den Schweißnahtflächen (4; 5) vom Rohr (2) und Stutzen (3) eine Zwischenlage (9), als metallische Folie ausgebildet, angeordnet ist.

5. Verfahren zur Herstellung eines Grundkörpers nach Anspruch 1, **dadurch gekennzeichnet,**
**dass** die zu schweißenden Teile, das Rohr (2) und der Stutzen (3) in ihrer gefügten finalen Position zu einem Elektronenstrahl (7), dem Verlauf der Stoßfuge (6) der I-Schweißnaht (8) folgend, umlaufend geführt werden, der Schweißwinkel des Elektronenstrahles (7) identisch dem Schweißnahtwinkel α ist, welcher dem Maß des Neigungswinkels der Schweißnahtflächen (4; 5) entspricht und der Elektronenstrahl eine spezifische Leistungsdichteverteilung in Abhängigkeit vom Flächen- und Breitenmaß der Schweißnahtflächen (4; 5) besitzt.

6. Verfahren nach Anspruch 5, **dadurch gekennzeichnet, dass**
der Elektronenstrahl (7) unter einem Schweißwinkel > 0° < 90° zur I-Schweißnaht (8) einstellbar ist.

7. Verfahren nach den Ansprüchen 5 und 6, **dadurch gekennzeichnet, dass**
der Elektronenstrahl (7) auf die Stoßfuge (6) gerichtet, die I-Schweißnaht (8) vollflächig verschweißt und eine spaltfreie Stoßfuge (6) herausgebildet wird.

8. Verfahren nach den Ansprüchen 5 bis 7, **dadurch gekennzeichnet, dass**
die Einstellung des Winkels des Elektronenstrahles (7) und die geneigte Ausbildung der Schweißnahtflächen (4; 5) in Abhängigkeit von der Position des Stutzens (3) zum Rohr (2) erfolgt.

## Claims

1. The carcass made from lengths of pipe joined together in welded construction and used as a basic element of components/modules; the lengths of pipe to be connected are joined together and electron beam welded, with the pipe (2) and the connecting piece (3) have weld faces (4;5) that are run from the carcass (1) at an incline, the angle of which formed by the inclination measurements of the weld faces (4; 5) towards the middle axis of the pipe (2) and the connecting piece (3) is identical to the weld seam angle α, whereby the weld seam angle α has an inclination of between 0 and 90 ° and corresponds to the welding angle α, which possesses the set and identical weld seam angle α towards the pipe axis in every welding position and the connecting piece (3) which, in the final position in relation to the pipe (2) is applied butt-jointed and the weld faces (4; 5) form a congruent level I-weld seam (8);
this is **characterised by** the fact that the connecting piece (3) in place on the pipe (2) is formed in the shape of a saddle at the pipe end and encircle the I-weld seam (8) and the common butt joint (6) of the weld faces (4; 5) in the shape of a saddle.

2. According to claim 1, the carcass is **characterised by** the fact that
the connecting piece (3) is arranged at right angles to the pipe (2) at a 90° angle or inclined at an angle ψ of 25 to 90° or at a parallel distance eccentrically to the x-axis of the pipe (2) on one or both sides on the pipe (2).

3. According one of claims 1 to 2, the carcass is **characterised by** the fact that
the angles of inclination of the weld faces (4; 5) of the pipe (2) and the connecting piece (3) in relation to the axis (10) of the pipe (2) are structured with angle dimensions within a 1 to 89° range

4. According to one of claims 1 to 3, the carcass is **characterised by** the fact that
an intermediate layer (9) is formed by a metallic foil between the weld faces (4; 5) of the pipe (2) and the connecting piece (3).

5. The process for manufacturing a carcass in accordance with claim 1 is **characterized by** the fact that the parts to be welded, the pipe (2) and the connecting piece (3) in their joined-up final position are guided to an electron beam (7) tracking the course of the butt joint (6) of the 1-weld seam; the welding angle of the electron beam (7) is identical to the weld seam angle α, which corresponds to the magnitude of the angle of inclination of the weld faces (4; 5) whereby the electron beam possesses a specific power density distribution depending on the surface area and breadth of the weld faces (4; 5).

6. According to claim 5 the process is **characterised by** the fact that the electron beam (7) can be set at a welding angle > 0° < 90° in relation to the I-weld seam (8).

7. According to claims 5 and 6, the process is **characterized by** the fact that
the electron beam (7), aimed at the butt joint (6), welds the I-weld seam (8) throughout and a crack-free butt joint (6) I is formed.

8. According to claims 5 and 7, the process is **characterised by** the fact that
the setting of the angle of the electron beam (7) and the formation of the weld faces (4;5) at an inclination depends on the position of the connecting piece (3) in relation to the pipe (2).

## Revendications

1. Corps de base en pièces de tuyaux assemblés, qui est conçu comme construction soudée et qui est utilisé comme élément de base pour des composants de construction/sous-groupes, dans lequel les pièces de tuyaux à assembler sont raccordées les unes aux autres et soudées par bombardement électronique, à l'occasion de quoi le tuyau (2) et le tuyau de rallonge (3) possèdent, depuis le corps de base (1), des surfaces de soudure inclinées (4; 5), dont l'angle d'inclinaison, formé par les mesures d'inclinaison des surfaces de soudure (4; 5) par rapport aux axes centraux du tuyau (2) et du tuyau de rallonge (3), est identique à l'angle de soudure α, à l'occasion de quoi l'angle de soudure α a une mesure d'inclinaison comprise entre 0 et 90 ° et qu'il correspond à l'angle de soudure α, qui possède, dans chaque position de soudure, l'angle de soudure réglé et identique de l'angle de soudure α par rapport à l'axe du tuyau et où le tuyau de rallonge (3) est enfiché de façon épointée dans la position finale par rapport au tuyau (2) et que les surfaces de soudures (4; 5) forment un cordon de soudure I (8) plan et coïncident, **caractérisé par le fait que**
le tuyau de rallonge (3) disposé sur le tuyau (2) a une forme de selle côté tuyau et englobent le joint commun (6) des surfaces de soudure (4, 5) et le cordon de soudure I (8) en forme de selle.

2. Corps de base selon la revendication 1, **caractérisé par le fait que**
par rapport au tuyau (2), le tuyau de rallonge (3) est disposé d'un côté ou des deux cotés du tuyau (2) à angles droits avec un angle de 90° ou de façon inclinée avec un angle ψ de 25 à 90° ou avec une distance parallèle excentrique par rapport à l'axe x du tuyau (2).

3. Corps de base selon une des revendications 1 et 2, **caractérisé par le fait que**
les angles d'inclinaison des surfaces de soudure (4; 5) du tuyau (2) et du tuyau de rallonge (3) par rapport à l'axe (10) du tuyau (2) sont formés avec des mesures d'angle dans le domaine de 1° à 89°.

4. Corps de base selon les revendications 1 à 3, **caractérisé par le fait que**
une couche intermédiaire (9), conçue comme film métallique, est disposée entre les surfaces de soudure (4, 5) du tuyau (2) et tuyau de rallonge (3).

5. Procédé pour la fabrication d'un corps de base selon la revendication 1, **caractérisé par le fait que**
les pièces à souder, le tuyau (2) et le tuyau de rallonge (3) dans leur position finale par rapport à un jet électronique (7) sont menés pour englober le profil du joint (6) du cordon de soudure **I** (8) tout en le suivant, que l'angle de soudure du jet électronique (7) est identique à l'angle de soudure α, qui correspond à la dimension de l'inclinaison des surfaces de soudure (4; 5) et que le jet électronique possède une répartition spécifique de la puissance volumique en fonction de l'unité de surface et de largeur des surfaces de soudure (4; 5).

6. Procédé selon la revendication 5, **caractérisé par le fait que**
le jet électronique (7) est réglable avec un angle de soudure de > 0° < 90° par rapport au cordon de soudure I (8).

7. Procédé selon les revendications 5 et 6, **caractérisé par le fait que**
le jet électronique (7) est dirigé vers le joint (6), le cordon de soudure I (8) est soudé sur toute sa surface et qu'il se forme un joint sans fente (6).

8. Procédé selon les revendications 5 à 7, **caractérisé par le fait que**
le réglage de l'angle du jet électronique (7) et la conformation inclinée des surfaces de soudure (4; 5) s'effectuent en fonction de la position du tuyau de rallonge (3) par rapport au tuyau (2).
